# EUROPÄISCHE PATENTANMELDUNG

(11) **EP 1 486 362 A2**
(43) Veröffentlichungstag der Anmeldung: **15.12.2004**
(21) Anmeldenummer: 04013032.0
(22) Anmeldetag: 02.06.2004
(51) Int. Cl.: B60H 1/00

(54) **Mehrzonen-Klimaanlage**

(30) Priorität: 11.06.2003 DE 10326649
(71) Anmelder: Behr GmbH & Co. KG, 70469 Stuttgart (DE)
(72) Erfinder: Baruschke, Wilhelm, 73117 Wangen (DE); Kampf, Hans, 71404 Korb (DE); Kemle, Andreas, 74321 Bietigheim-Bissingen (DE); Lochmahr, Karl, 71665 Vaihingen (DE)

(57) **Zusammenfassung**

Die Erfindung betrifft eine Mehrzonen-Klimaanlage mit einer Mehrzahl einzelner Klimazonen, insbesondere für Kraftfahrzeuge, mit einer Regeleinrichtung zum Regeln von das Innenraumklima bestimmenden Klimaparametern, wie Raumtemperatur, Mischluftzusammensetzung, Luftverteilung und/oder Gebläsedrehzahl, nach vorgegebenen Regelkennlinien in Abhängigkeit von mittels Sensoren erfassten Umweltparametern, wie Sonneneinstrahlung, wobei für jede einzelne Klimazone eine individuelle, klimazonenspezifische Luftdüsenanordnung bestehend aus mindestens einer Luftdüse vorgesehen ist.

## Beschreibung

Die Erfindung betrifft eine Mehrzonen-Klimaanlage, insbesondere für ein Kraftfahrzeug, gemäß dem Oberbegriff des Anspruchs 1.

Aus der DE 34 09 321 C2 ist eine Klimaanlage für Kraftfahrzeuge mit einer Regeleinrichtung zum Regeln von das Innenraumklima bestimmenden Klimaparametern, wie Raumtemperatur, Mischluftzusammensetzung, Luftverteilung und Gebläsedrehzahl, nach vorgegebenen Regelkennlinien (Fabrikprogramm) in Abhängigkeit von mittels Sensoren erfassten Umweltparametern, wie Innenraumtemperatur, Außentemperatur, Mischlufttemperatur und Sonneneinstrahlung, bekannt. Eine derartige Klimaanlage lässt noch Wünsche offen.

Ferner ist aus der DE 195 26 450 C1 ein Verfahren zur Steuerung einer Klimaanlage für ein Kraftfahrzeug mit mehreren Klimatisierungskanälen für unterschiedliche Innenraumzonen und einem Solarsensor bekannt, wobei bei einer über den Solarsensor ermittelten, erhöhten Sonneneinstrahlungsintensität gezielt diejenige Klimatisierungskanäle, die denjenigen Fahrzeuginnenraumzonen zugeordnet sind, in denen ein jeweiliger Fahrzeugsitz belegt ist, zur Erzielung einer erhöhten Klimatisierungswirkung angesteuert werden. Nachteilig bei diesem Verfahren ist, dass für eine gezielte Steuerung im Prinzip für jeden Fahrzeugsitz mindestens ein Solarsensor erforderlich ist.

Die DE 40 40 846 C2 beschreibt eine Einrichtung zur Regelung der Innenraumtemperatur von Kraftfahrzeugen, mit einem elektrischen Regler, der mit mindestens einem Innen- und/oder Außentemperaturfühler, mit einem Solltemperaturgeber, mit mindestens einem Sonnensensor und mit mindestens einem Stellglied zur Beeinflussung der dem Innenraum zugeführten Wärmemenge verbunden ist, wobei der mindestens eine Sonnensensor mit einer Bewertungseinrichtung verbunden ist, die das Signal des Sonnensensors verzögert der Regelung zuführt, wobei die Bewertungseinrichtung ein Verzögerungsglied mit einer Zeitkonstanten aufweist und wobei parallel zu dem ersten Verzögerungsglied mindestens ein zweites Verzögerungsglied mit einer zweiten. Zeitkonstanten angeordnet ist, wobei die Zeitkonstanten unterschiedlich sind und wobei die Verzögerungsglieder über einen Mittelwertbildner mit dem Regler verbunden sind. Dabei ist der Sonnensensor eine Fotodiode.

Die DE 100 16 419 C2 beschreibt eine Vorrichtung zur indirekten Erfassung der in den Innenraum eines Fahrzeuges einfallenden Sonnenstrahlung. Diese Vorrichtung ist mit mindestens einem Fotosensor mit einer strahlungssensitiven Sensorfläche zur Erfassung der von mindestens einem Bereich des Innenraums, dessen Einbauten und/oder dessen Insassen ausgehenden Wärmestrahlung versehen. Ferner weist die Vorrichtung ein Gehäuse zur Unterbringung von mindestens einem Fotosensor auf. Das Gehäuse weist mindestens eine an den Innenraum des Fahrzeuges angrenzende, der Wärmestrahlung oder der Wärmestrahlung und der Sonnenstrahlung ausgesetzte Strahlungseinfallfläche auf. Die Sensorfläche des Fotosensors ist relativ zur Strahlungseinfallfläche des Gehäuses derart angeordnet, dass auf die Sensorfläche die Wärmestrahlung und im Wesentlichen keine direkte Sonnenstrahlung oder direkte Sonnenstrahlung lediglich aus einer Richtung innerhalb eines Einfallwinkelbereichs auftritt, in dem ihr Einfluss auf das Temperatur- und Behaglichkeitsempfinden von sich im Innenraum des Fahrzeuges befindenden Insassen vernachlässigbar ist.

Derartige Klimaanlagen lassen noch Wünsche offen.

Es ist Aufgabe der Erfindung, eine verbesserte Mehrzonen-Klimaanlage zur Verfügung zu stellen.

Diese Aufgabe wird gelöst durch eine Mehrzonen-Klimaanlage mit den Merkmalen des Anspruchs 1. Vorteilhafte Ausgestaltungen sind Gegenstand der Unteransprüche.

Erfindungsgemäß ist eine Mehrzonen-Klimaanlage mit einer Mehrzahl einzelner Klimazonen vorgesehen, wobei für jede einzelne Klimazone eine individuelle, klimazonenspezifische Luftdüsenanordnung bestehend aus einer, bevorzugt mehreren Luftdüsen vorgesehen ist. Dabei sind die Luftdüsen ausschließlich einer Klimazone, d.h. einem Sitzplatz zugeordnet, so dass eine Optimierung der Klimatisierung in jeder Zone erreicht werden kann.

Vorzugsweise ist hierbei für jede einzelne Klimazone eine Regelung der Luftaustrittsparameter, insbesondere der Luftaustrittstemperatur, der jeweiligen Luftdüsenanordnung und/oder einzelner Luftdüsen vorgesehen. Bevorzugt kann neben der Luftaustrittstemperatur auch die Luftaustrittsgeschwindigkeit und/oder die austretende Luftmenge individuell, insbesondere in Abhängigkeit von der Sonneneinstrahlung in dieser Klimazone, geregelt werden. Hierbei können bei einer entsprechenden Ausgestaltung der Klimaanlage in jeder einzelnen Klimazone auch unterschiedliche Luftaustrittstemperaturen und/oder Luftaustrittsgeschwindigkeiten für jede einzelne der dieser Zone zugeordneten Luftdüsen in Abhängigkeit der Richtung der Sonneneinstrahlung automatisch eingestellt werden, um eine möglichst gleichmäßige Temperatur in der entsprechenden Zone zu gewährleisten. Dadurch lässt sich der Komfort deutlich erhöhen.

Bevorzugt ist das Kraftfahrzeug mit einem GPS-Navigationssystem ausgestattet, so dass unter Berücksichtigung der aktuellen Uhrzeit und des aktuellen Datums der Sonnenstand berechnet werden kann und dieser bei der Steuerung der Klimaanlage berücksichtigt wird. Begrifflich soll unter der Ausstattung mit einem GPS-Navigationssystem auch eine Verbindung oder Datenleitung mit einem anderweitig im Kraftfahrzeug angeordneten GPS-Navigationssystem zu verstehen sein.

Insbesondere wird bei der Steuerung der Klimaanlage auch die aktuelle Ausrichtung des Fahrzeugs berücksichtigt, d.h. z.B. die beiden individuellen Sitze auf der Seite des Fahrzeuges mit erhöhter Sonneneinstrahlung können speziell gekühlt werden. Ferner lässt sich beispielsweise der Schattenwurf des Fahrzeugdaches, der Schattenwurf von Bergen, Tunnel, die Änderung der Sonneneinstrahlung bei Kurvenfahrten, gegebenenfalls auch der Schattenwurf von Bäumen o.ä. im Voraus berechnen und bei der Wertung von Helligkeitsmessdaten eines Fotosensors sowie bei der Steuerung der Klimaanlage gegebenenfalls direkt berücksichtigen.

Vorzugsweise ist für die Ermittlung der Sonneneinstrahlung ein Fotosensor mit einer Zone vorgesehen. Hierbei ist lediglich ein einfacher Fotosensor erforderlich, da die Messdaten (Helligkeitsdaten) mit Hilfe eines Rechners, der vorzugsweise Teil der Klimaanlage ist und deren Steuerung übernimmt, bereinigt werden können, so dass nicht mehrere Sensoren an verschiedenen Stellen des Fahrzeuges oder in verschiedenen Winkeln zueinander verwendet werden müssen. Auf diese Weise lassen sich Kosten einsparen, da Sensoren, einschließlich deren Einbau, teurer sind als die alternativ erforderliche Software und hierfür benötigte größere Rechnerleistung.

Vorzugsweise sind bei der Klimaanlage ferner Sensoren für die Innenraumtemperatur, Außentemperatur und/oder Mischlufttemperatur vorgesehen, deren Messdaten ebenfalls für die Optimierung der lokalen Innenraumtemperatur verwendet werden können.

Vorzugsweise wird die Glasart der Scheiben berücksichtigt, da diese einen wesentlichen Einfluss auf die Erwärmung des Fahrzeuginneren infolge von Sonnenstrahlen hat. Dabei ist ferner die Anordnung und Fläche der Fenster des jeweiligen Kraftfahrzeuges zu berücksichtigen.

Vorzugsweise umfasst das GPS-Navigationssystem eine Straßenkarte mit Höhendaten. Dies erlaubt beispielsweise eine Berücksichtigung des Schattenwurfs durch hohe Berge.

Im Folgenden wird die Erfindung anhand zweier Ausführungsbeispiele unter Bezugnahme auf die Zeichnung im Einzelnen erläutert. In der Zeichnung zeigen:

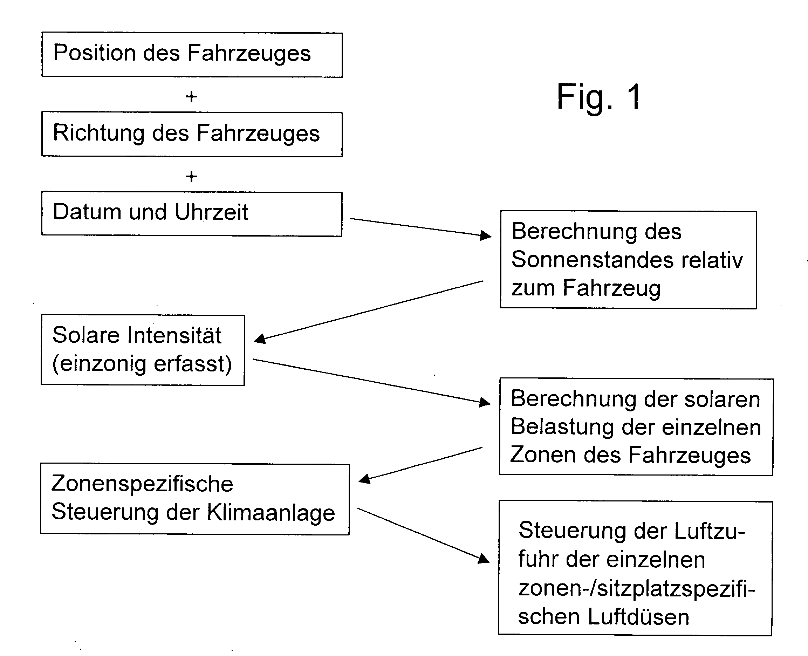

- Fig. 1: ein Flussdiagramm, das die Ermittlung der tatsächlichen Sonneneinstrahlung gemäß dem ersten Ausführungsbeispiel darstellt, und
- Fig. 2: eine schematische Darstellung einer erfindungsgemäßen Regelung gemäß dem zweiten Ausführungsbeispiel.

Eine Klimaanlage, wie sie in ihrem prinzipiellen Aufbau beispielsweise in der DE 100 16 419 C2 offenbart ist, deren Offenbarung - soweit nicht vorliegend anders beschrieben oder explizit ausgenommen - ausdrücklich mit in die vorliegende Anmeldung einbezogen wird, weist einen, im Gegensatz zu der DE 100 16 419 C2 einfachen, d.h. einzonigen, Fotosensor (Fotozelle) auf. Der Fotosensor kann beispielsweise im Armaturenbrett oder der Hutablage angeordnet sein.

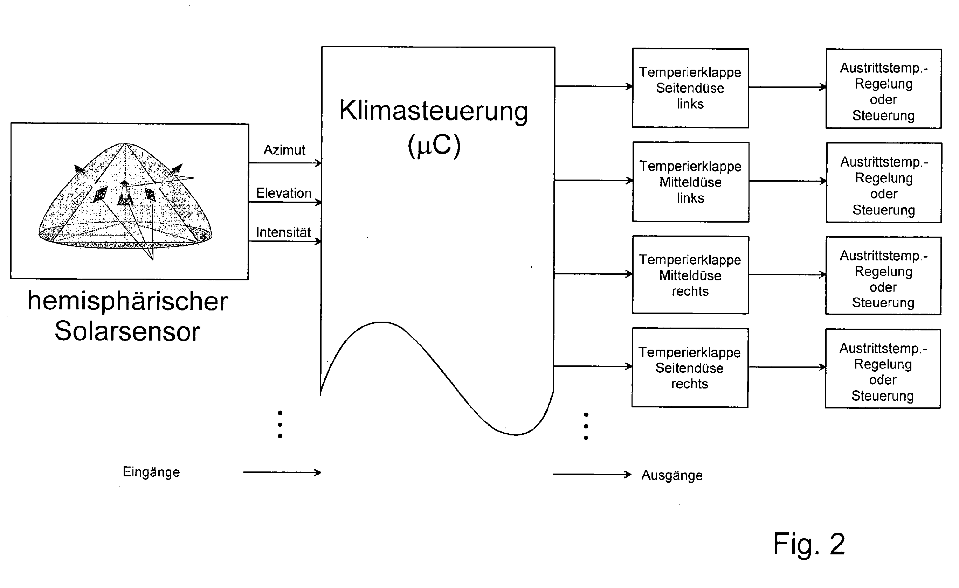

Ferner weist das Fahrzeug vorzugsweise ein GPS-Navigationssystem auf, das mit der Steuerung der Klimaanlage verbunden ist. Alternativ kann das GPS-Navigationssystem in der Klimaanlage integriert sein. Das GPS-Navigationssystem sendet laufend die aktuellen Daten, wie Uhrzeit, Datum, Position und Ausrichtung (Fahrtrichtung) des Fahrzeugs, an einen in der Steuerung der Klimaanlage integrierten Rechner. Dieser Rechner berechnet aus diesen aktuellen Daten den momentanen Stand der Sonne, einschließlich deren Position bezüglich des Fahrzeugs. Ferner können noch Daten in Hinblick auf die aktuelle Höhe (Position über dem Meeresspiegel) bei Verwendung entsprechender Karten verwendet werden. Alternativ, wie beim später unter Bezugnahme auf Fig. 2 beschriebenen zweiten Ausführungsbeispiel, oder zusätzlich kann ein sogenannter hemisphärischer Solarsensor verwendet werden, der die Intensität, den Azimut und die Elevation der Sonne ermittelt, wobei die ermittelten Daten bei der Steuerung der Klimaanlage verwendet werden.

Die vom Fotosensor ermittelten Helligkeitsdaten werden mit Hilfe der Positionsdaten bereinigt, beispielsweise wenn auf Grund des aktuellen Sonnenstandes das Fahrzeugdach Schatten wird. Dabei werden auch die zuvor gemessenen Helligkeitsdaten berücksichtigt, so dass in diesem Fall ein gemittelter und bereinigter Wert für die weitere Berechnung verwendet wird.

Bei der weiteren Berechnung kann ferner der Straßenverlauf, der auf Grund des GPS-Navigationssystems im Wesentlichen bekannt ist, berücksichtigt werden, so z.B. in Hinblick auf Kurven, Tunnel, Schatten von Bergen im Gebirge bei entsprechendem Sonnenstand.

Mit Hilfe der Berechnungen erfolgt eine optimierte Steuerung der Mehrzonen-Klimaanlage, so dass in allen Fahrzeugbereichen, d.h. allen Klimazonen jeweils der aktuelle Temperierungszustand auch bei Änderungen der Sonneneinstrahlung in der gesamten Klimazone beibehalten wird. Dies wird insbesondere durch eine vollständige Individualisierung der Luftdüsen am besten ermöglicht. Dabei sind für jeden Sitzplatz eigene Luftdüsen oder Luftdüsenanordnungen vorgesehen, die individuell temperiert werden können. Dies betrifft insbesondere die Luftdüsen der Mittelebene, so dass jedem Sitzplatz eine individuelle linke, mittlere und rechte Mitteldüse zugeordnet ist. Weitere sitzplatzspezifische Luftdüsen, wie beispielsweise Seitendüsen oder Düsen im Bereich des Fußraums, können vorgesehen sein.

Gemäß dem zweiten in Fig. 2 dargestellten Ausführungsbeispiel wird zur Datenermittlung für die optimale Steuerung einer Mehrzonen-Klimaanlage ein hemisphärischer Solarsensor verwendet, dessen ermittelte Daten bezüglich der Intensität, dem Azimut und der Elevation der Sonne für die (Fein-)Steuerung der Klimaanlage verwendet werden (vgl. Eingänge in Fig. 2). In Abhängigkeit der ermittelten Daten wird für jede Zone, das heißt beispielsweise für den Fahrersitz, den Beifahrersitz und zwei Fondsitze im Falle einer vierzonigen Klimaanlage, die zu erwartende Temperaturänderung in Folge einer Veränderung der Sonneneinstrahlung ermittelt und in Abhängigkeit von der zu erwartenden Veränderung werden die einzelnen Temperierklappen, d.h. die Seitendüse links, die Mitteldüse links, die Mitteldüse rechts, die Seitendüse rechts, sowie weitere ggf. vorhandene zonenspezifische Düsen, eingestellt. Entsprechend erfolgt gemäß dem zweiten Ausführungsbeispiel eine Regelung der entsprechenden Luft-Austrittstemperaturen der durch die einzelnen Düsen austretenden Luft, so dass in jeder Klimazone durch die einzelnen dieser Klimazone zugeordneten Luftdüsen unterschiedlich temperierte Luft mit unterschiedlichen Strömungsgeschwindigkeiten zugeführt werden kann. Vergleiche hierzu die Ausgänge in Fig. 2. Erfolgt beispielsweise eine starke Sonneneinstrahlung in Fahrtrichtung gesehen von links, so wird durch die linke Seiten- und Mitteldüse des Fahrers dieser Klimazone kältere Luft zugeführt als durch die rechte Seiten- und Mitteldüse derselben Klimazone. Dadurch ergibt sich eine erhebliche Komfortsteigerung für die Insassen.

In Fig. 2 sind die standardmäßig vorhandenen Eingangssignale, wie z.B. Innentemperatur, Außentemperatur u.a. und Ausgangssignale, wie z.B. Klimagebläsesteuerung, Klimakompressorsteuerung u.a. des Klimasteuergerätes nicht dargestellt.

Anstelle des hemisphärischen Solarsensors gemäß dem zweiten Ausführungsbeispiel kann auch eine beliebige andere Anordnung zur Ermittlung der entsprechenden Daten verwendet werden.

## Patentansprüche

1. Mehrzonen-Klimaanlage mit einer Mehrzahl einzelner Klimazonen, insbesondere für Kraftfahrzeuge, mit einer Regeleinrichtung zum Regeln von das Innenraumklima bestimmenden Klimaparametern, wie Raumtemperatur, Mischluftzusammensetzung, Luftverteilung und/oder Gebläsedrehzahl, nach vorgegebenen Regelkennlinien in Abhängigkeit von mittels Sensoren erfassten Umweltparametern, wie Sonneneinstrahlung, **dadurch gekennzeichnet, dass** für jede einzelne Klimazone eine individuelle, klimazonenspezifische Luftdüsenanordnung bestehend aus mindestens einer Luftdüse vorgesehen ist.

2. Mehrzonen-Klimaanlage nach Anspruch 1, **dadurch gekennzeichnet, dass** für jede einzelne Klimazone eine Regelung der Luftaustrittsparameter der jeweiligen individuellen, klimazonenspezifischen Luftdüsenanordnung und/oder einzelner individueller, klimazonenspezifischer Luftdüsen vorgesehen ist.

3. Mehrzonen-Klimaanlage nach Anspruch 1 oder 2, **dadurch gekennzeichnet, dass** ein hemisphärischer Solarsensor und/oder GPS-Navigationssystem mit Uhr zur Ermittlung des Sonnenstandes vorgesehen ist.

4. Mehrzonen-Klimaanlage nach einem der vorhergehenden Ansprüche, **dadurch gekennzeichnet, dass** zur Ermittlung der Sonneneinstrahlung ein Fotosensor mit einer Zone vorgesehen ist.

5. Mehrzonen-Klimaanlage nach einem der vorhergehenden Ansprüche, **dadurch gekennzeichnet, dass** Sensoren für die Innenraumtemperatur, Außentemperatur und/oder Mischlufttemperatur in jeder individuellen Klimazone vorgesehen sind.

6. Mehrzonen-Klimaanlage nach einem der vorhergehenden Ansprüche, **dadurch gekennzeichnet, dass** die Glasart der Scheiben und/oder die Anordnung und Fläche der Fenster berücksichtigt wird.

7. Mehrzonen-Klimaanlage nach einem der vorhergehenden Ansprüche, **dadurch gekennzeichnet, dass** das GPS-Navigationssystem eine Straßenkarte mit Höhendaten umfasst.

8. Verfahren zur Steuerung einer Mehrzonen-Klimaanlage nach einem der vorhergehenden Ansprüche, **dadurch gekennzeichnet, dass** das Verfahren die Schritte Bestimmung der Position des Fahrzeuges, Bestimmung der Richtung des Fahrzeuges und Bestimmung des Datums und der Uhrzeit umfasst, wobei aus den Daten der Sonnenstand relativ zum Fahrzeug berechnet und in Abhängigkeit hiervon jeder Klimazone individuell über individuelle Luftdüsen oder Luftdüsenanordnungen mit entsprechend temperierte Luft zugeführt wird.

9. Verfahren nach Anspruch 8 , **dadurch gekennzeichnet, dass** die solare Intensität gemessen wird.

10. Verfahren nach Anspruch 9, **dadurch gekennzeichnet, dass** die solare Intensität mittels eines einzonigen Fotosensors erfasst wird.

11. Verfahren nach Anspruch 9 oder 10, **dadurch gekennzeichnet, dass** die gemessene solare Intensität rechnerisch bereinigt wird.

12. Verfahren nach einem der Ansprüche 8 bis 11, **dadurch gekennzeichnet, dass** die Steuerung der Klimaanlage in Abhängigkeit der unter Berücksichtigung der Messdaten berechneten momentanen und zu erwartenden Sonneneinstrahlung in das Fahrzeug erfolgt.

13. Verfahren nach Anspruch 12, **dadurch gekennzeichnet, dass** die Steuerung der Klimaanlage für jede Luftzufuhr in den Fahrzeuginnenraum auf Grund eigener Berechnungen erfolgt.
